# EUROPÄISCHE PATENTSCHRIFT

(11) **EP 0 901 863 B1**
(45) Veröffentlichungstag und Bekanntmachung des Hinweises auf die Patenterteilung: **23.04.2003**
(21) Anmeldenummer: 98116735.6
(22) Anmeldetag: 03.09.1998
(51) Int. Cl.: B23K 3/06

(54) **Weichlot**
Solder
Brasage tendre

(30) Priorität: 09.09.1997 DE 29716141 U
(43) Veröffentlichungstag der Anmeldung: 17.03.1999
(73) Patentinhaber: JL Goslar GmbH, 38640 Goslar (DE)
(72) Erfinder: Ernst, Johannes, 22339 Hamburg (DE)
(74) Vertreter: Richter, Werdermann & Gerbaulet

(56) Entgegenhaltungen:
- CH-A- 653 838
- PATENT ABSTRACTS OF JAPAN vol. 017, no. 027 (M-1355), 19. Januar 1993 & JP 04 251691 A (MATSUSHITA ELECTRIC IND CO LTD), 8. September 1992

## Beschreibung

Die Erfindung betrifft ein flussmittelarmes Lot zum lötenden Verbinden von zwei Werkstücken, gemäß dem Oberbegriff des Anspruches 1.

Löten ist ein Verfahren zum Verbinden metallischer Werkstücke mit Hilfe eines geschmolzenen Zusatzmetalles, welches auch als Lot bezeichnet wird, dessen Schmelztemperatur unterhalb der zu verbindenden Grundwerkstoffe liegt. Die Grundwerkstoffe bzw. die zu verbindenden Werkstoffe werden nicht geschmolzen, sondern zur benetzt. Gegebenenfalls wird mit Flussmitteln und/oder Lötschutzgasen gearbeitet. Je nach Arbeitstemperatur, die die niedrigste Oberflächentemperatur des Werkstückes an der Lötstelle ist, bei der das Lot sich ausbreiten, fließen und am Grundwerkstoff binden kann, unterscheidet man Weichlöten (Arbeitstemperatur kleiner als 450° C) und Hartlöten (Arbeitstemperatur größer als 450° C).

Die Arbeitstemperatur ist stets höher als die Solidus-Temperatur des Lotes. Sie kann mit der Liquidus-Temperatur des Lotes zusammenfallen bzw. oberhalb oder unterhalb davon liegen. Lote sind reine Metalle oder Legierungen in Form von Draht, Stäben, Blechen oder Pulvem.

Die Weichlote, die nur eine geringe Zugfestigkeit besitzen (20 bis 80 N/mm²) sind meistens Zinn-Blei-Legierungen. Es kommen jedoch auch Zink (bis 23 %) - Kupfer (bis 2 %) - Silberzusätze (bis 10 %) oder Cadmium- bzw. Bleilote in Frage.

Hartlote mit Festigkeitswerten von 200 bis 500 N/mm² sind Legierungen auf Kupfer-Zink- oder auf Silber-Kupfer-Basis. Neben Aluminium-Silizium-Legierungen für das Löten von Aluminiumwerkstoffen gibt es noch sog. Hochtemperaturlote auf Gold-Nickel- oder Palladium-Basis, die thermisch hoch beansprucht werden können.

Es ist nach der JP-A-04 251 691 bekannt, für Lötzwecke Flussmittel einzusetzen.

Die beim Löten eingesetzten Flußmittel sind nichtmetallische Stoffe (Säuren, Salze, Harze), die aufgrund ihrer chemischen Reaktivität das Hart- und Weichlöten von Metallen erleichtern. Sie haben die Aufgabe, nach erfolgter Vorreinigung der Lötfläche noch vorhandene Oberflächenfilme zu beseitigen und eine Neubildung zu verhindern, damit das Lot die Lötfläche benetzen kann. Zum Weichlöten nimmt man bevorzugt Kolophonium, synthetische Flußmittel oder Salzsäure und zum Hartlöten Borax.

Da Flußmittel naturgemäß ätzende Wirkungen besitzen, besteht die Gefahr, daß sie, falls sie auf der Lötstelle zurückbleiben, später die Korrosion fördern. Ideale Flußmittel sind bei Raumtemperatur neutral und entfalten ihre ätzende Wirkung erst bei Löttemperatur. Außerdem sollen nach dem Lötvorgang die Flußmittel idealer Weise nicht mehr vorhanden sein.

Lötdrähte sind oftmals gefüllt mit kolophoniumhaltigen Flußmitteln, die die Aufgabe haben, die Oberfläche zu reinigen und zu aktivieren. Bei den herkömmlichen Loten sind große Flußmittelmengen erforderlich, was sehr leicht zum Entstehen von Korrosion führt, was gerade bei Schaltungen mit Leiterbahnen und elektronischen Bauteilen vermieden werden muß.

Durch die CH-A-653 838 ist eine Vorrichtung zum Überschieben von Lötringen über Anschlussstifte von Stecksocken bekannt. Diese Vorrichtung ist zur Lösung der Aufgabe konzipiert, kleine Lötringe über in Reihen angeordnete Anschlussstifte von Stecksockeln zu schieben. Diese Vorrichtung umfasst eine schräggestellte Förderrinne, in der die auf die Stifte aufzusetzenden Lötringe hochkantstehend gelagert sind. Über diese Rinne gleiten die Ringe aufgrund ihrer Schwerkraft selbsttätig zur Übergabestation am Rinnenende, in dessen Bereich sich ein Anschlag befindet, der das Herausfallen der Ringe aus der Rinne verhindert. Des weiteren umfasst diese Vorrichtung eine horizontale Führungsnut unterhalb der Rinne, wobei diese Führungsnut in die Rinne an der Stelle einmündet, an der die Öffnung des jeweils untersten, also im Bereich des Rinnenendes liegenden Ringes liegt. Die Vorrichtung wird mit der Rinne auf die Stifte aufgesetzt und entgegen der Vorschubrichtung der in Reihe hintereinander liegenden und senkrecht stehenden, zugeführten Stifte bewegt. Hierdurch erreichen die Stifte nacheinander die Rinne, schnäbeln in die Öffnung des jeweils untersten Ringes ein und ziehen diesen nach oben gegen die Kraft einer Feder aus der Rinne, worauf der Ring am Stift nach unten gleitet. Mit dieser Vorrichtung werden ausschließlich vorgefertigte Lötringe auf die Anschlussstifte aufgesetzt. Eine spezielle Lotausgestaltung aus mehreren Materialkomponenten ist bei dieser Vorrichtung nicht vorgesehen. Es werden hier auch keine zwei Werkstücke miteinander verbunden, sondern vorgefertigte, aus einer Komponente bestehende Lötringe werden auf ein Werkstück in Form von Anschlussstiften aufgeschoben.

Es ist Aufgabe der vorliegenden Erfindung, ein verbessertes Lot der obengenannten Art zur Verfügung zu stellen, welches die obengenannten Nachteile beseitigt und flußmittelarm ist, so daß es für Lötvorgänge an temperaturhochempfindlichen Leiterbahnen und Schaltungen einsetzbar ist, ohne daß es zu einer nachträglichen Korrosion der Bauteile kommen kann.

Diese Aufgabe wird durch ein flussmittelarmes Lot der o.g. Art mit den in Anspruch 1 gekennzeichneten Merkmalen und durch die Verwendung gemäß Anspruch 13 gelöst.

Die Erfindung besteht nunmehr in einem neuartig aufgebauten Lötkörper.

Dazu ist es erfindungsgemäß vorgesehen, daß das Lot als Lötdraht gebildet ist, mit einem Raumkörper mit mindestens einem Hohlraum, welcher mit wenigstens einer ersten lotspezifischen, von einem lotspezifischen Flussmittel umgebenden Metallegierungen gefüllt ist, wobei das Lot und die Metallegierung gleich oder ungleich sind.

Dies hat den Vorteil, daß durch diese Anordnung eine feinste Dosierung von Lot möglich und somit eine erforderliche Flußmittelmenge reduziert ist, was insbesondere von großem Vorteil beim Löten von Leiterbahnen bei Schaltungen und dgl. der Fall ist, denn je geringer die Flußmittelmenge ist, desto geringer ist die Aggressivität und das Entstehen von Korrosion.

Vorzugsweise Weitergestaltungen der Vorrichtung sind in den Ansprüchen 2 bis 7 beschrieben.

So ergibt sich eine besonders einfache und wirkungsvolle Anordnung dadurch, daß die erste lotspezifische Metallegierung in Form von ersten partikelartigen Volumeneinheiten, insbesondere Kugeln, in dem Hohlraum angeordnet ist. Insbesondere durch die größere Außenfläche des Lotes durch die partikelartigen Volumeneinheiten wird weniger Flußmittel benötigt, da sich dieses besser und schneller in und um das Lot verteilt.

Eine zusätzliche Reduktion von Flußmittel, welches während eines Lötvorganges nicht zusätzlich zugeführt werden muß, erzielt man dadurch, daß die ersten partikelartigen Volumeneinheiten von wenigstens einem lotspezifischen Flußmittel umgeben und zu bezüglich der ersten partikelartigen Volumeneinheiten größeren zweiten partikelartigen Volumeneinheiten, insbesondere Kugeln, zusammengefaßt sind, wobei auch andere geometrische Formen möglich sind.

Eine einfache und kostengünstige Herstellung eines erfindungsgemäßen Lotes ergibt sich dadurch, daß die erste lotspezifische Metallegierung pastenförmig mit wenigstens einem Flußmittel gemischt und in dem mindestens einen Hohlraum angeordnet ist.

Zum Anpassen des Lotes an verschiedene Lötaufgaben mit unterschiedlichen Werkstücken und Löttemperaturen ist in besonders bevorzugter Weise der Raumkörper aus wenigstens einer zweiten lotspezifischen Metallegierung gefertigt.

Zweckmäßigerweise ist für eine einfache Handhabung des Lotes der Raumkörper beispielsweise röhrenförmig, als Draht, als Kugel oder als Blech ausgebildet.

In einer besonders bevorzugten Ausführungsform sind in dem Hohlraum zusätzlich und voneinander getrennt chemische Verbindungen angeordnet, welche bei Erwärmung des Raumkörpers miteinander in Verbindung treten und in einer exothermen Reaktion das Lot über seinen Schmelzpunkt hinaus erwärmen. Dies hat den Vorteil, daß ein Lötvorgang ohne übermäßige Erwärmung der zu verbindenden Werkstücke erfolgt, da die schmelzende Erwärmung des Lotes von innen heraus aus dem Lot selbst erfolgt.

Weitere vorteilhafte Ausführungsformen sind Gegenstand der Unteransprüche.

Nachstehend wird die Erfindung anhand der beigefügten Zeichnungen näher erläutert. Diese zeigen in
- Fig. 1: eine bevorzugte Ausführungsform eines Lotes in teilweise geschnittener Seitenansicht,
- Fig. 2: eine vergrößerte Darstellung des Bereiches A von Figur 1,
- Fig. 3: zwei mit einem erfindungsgemäßen Lot verbundene Werkstücke, und
- Fig. 4: einen Querschnitt durch ein Lot mit einem Mehrkammersystem.

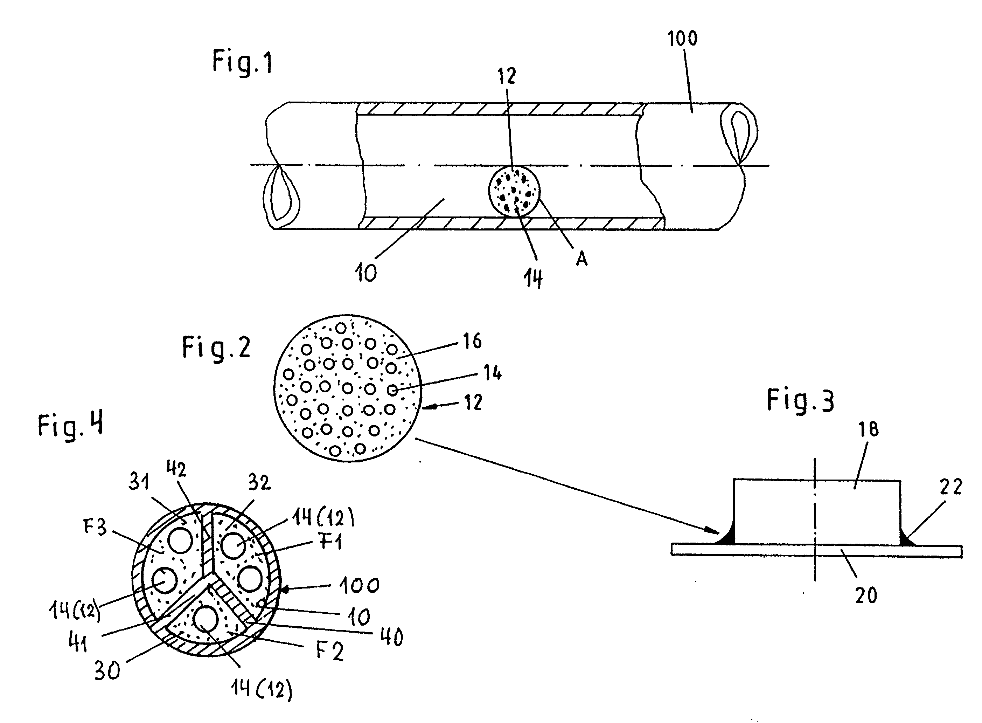

Fig. 1 zeigt einen Lotdraht 100 mit in dessen Innenraum 10 angeordneter Anzahl von kleinen Kügelchen 12.

Fig. 2 zeigt vergrößert ein Kügelchen 12 aus dem Innenraum 10 des Lotdrahtes 100. Dieses Kügelchen 12 besteht aus einer Anzahl von Lotkugeln 14 beispielsweise einer spezifischen Metallegierung, wobei diese Lotkugeln 14 in ein Flußmittel 16 eingebettet sind. Bevorzugterweise werden hier als Flußmittel 16 Kolophonium oder synthetische Flußmittel eingesetzt, welches im erstarrten Zustand die Lotkugeln 14 zusammenhält. Sowohl die Kügelchen 12 als auch die Lotkugeln 14 haben nicht notwendigerweise eine kugelige Formen sondern können auch andere geometrische Formkörpergestaltungen aufweise. Die Lotkugeln 14 bestehen bevorzugterweise aus einem Lötzinn-Material und sind von dem Flußmittel 16 umgeben. Der Raumkörper des Lots schmilzt beim Erwärmen selbst auf und besteht aus einer Lötzinnlegierung, einem Lötzinn oder aus einer anderen geeigneten Metallverbindung.

Es ist auch möglich, einen Flußmittelbrei aus einem anderen Material zu verwendet. Hierbei besteht dann die Möglichkeit, dem ganzen Gebilde noch eine Umhüllung zu geben, die die Lotkugeln 14 mit dem umgebenden Flußmittel 16 zusammenhält. Ein ausreichender Zusammenhalt der Lotkugeln 14 wird erreicht, wenn ein pastenförmiges oder hochviskoses Flußmittel 16 in Form eines Flußmittelbreis verwendet wird.

Lotdraht 100 und Lotkugeln 14 können aus gleichen oder unterschiedlichen Materialien gefertigt sein, d.h. aus gleichen oder unterschiedlichen Legierungen bestehen, wobei auch die Möglichkeit besteht, die Lotkugeln 14 im Innenraum des Lotdrahtes 100 in verschiedenartigen Materialgestaltungen einzusetzen, so daß bei der Vielzahl der Lotkugeln 14 auch unterschiedliche Metalle oder Metallegierungen eingesetzt werden können, um das Lötmaterial in Bezug auf Schmelzpunkt und dgl. dem zu lötenden Grundmaterial anpassen zu können.

Je nach dem, wie die zu lötenden Gegenstände temperaturempfindlich sind, kann durch Materialwahl der Lotkügelchen 12 eine Anpassung für den Lötvorgang geschaffen werden, so daß Lotdrähte 100 für Lötvorgänge mit den verschiedensten Temperaturen eingesetzt werden können.

Ferner ist es besonders vorteilhaft, wenn das Lot zusätzlich chemische Verbindungen enthält, welche bei Kontakt miteinander eine exotherme chemische Reaktion eingehen. Im Lotdraht 100 sind vor der Anwendung in einem Lötvorgang diese chemischen Verbindungen dann in entsprechender Weise voneinander getrennt, so daß keine chemische Reaktion stattfindet. Dies könnte beispielsweise dadurch erfolgen, daß Kügelchen 12 mit einer darin eingeschlossenen ersten chemischen Verbindung oder Legierung und Kügelchen 12 mit einer darin eingeschlossenen zweiten chemischen Verbindung vorgesehen sind, welche erst bei aufschmelzen der Kügelchen 12 unter mäßiger Erwärmung miteinander in Kontakt kommen. Aufgrund der daraufhin erfolgenden exothermen Reaktionen wird eine für den Lötvorgang ausreichende und verwendbare Temperatur erzeugt, wobei dabei eine höhere Außenerwärmung des zu lötenden Materials nicht eintritt.

Exotherme, chemische Reaktionen erfolgen femer bei einem Zusammenkommen von mindestens zwei oder mehr Flußmitteln F1, F2, F3 (Fig. 4). Des weiteren können exotherme Reaktionen beim Zusammenschmelzen zweier unterschiedlicher Metalle, wie z.B. Palladium und Zinn eingeleitet und erhalten werden.

Fig. 3 zeigt femer zwei miteinander verlötete Werkstücke 18 und 20. Hierbei benetzt ein Lot 22 eine Oberfläche der Werkstücke 18, 20 und legt sich entsprechend an einer Stoßkante der beiden Werkstücke kehlförmig an, wobei diese Form durch eine Oberflächenspannung und Adhäsionskräfte an den Oberflächen der Werkstücke 8, 20 des flüssigen Lotes 22 hervorgerufen wird.

Der Innenraum 10 des Lotes 100 kann in mehrere Kammern 30, 31, 32 vermittels Trennwänden 40, 41, 42 unterteilt sein (Fig. 4). Jede Kammer nimmt dann eine Anzahl von Lotkugeln 14 auf und ist mit einem Flußmittel F, F1, F2 gefüllt, die dem Flußmittel 16 entsprechen. Durch die Ausbildung von drei in Lotlängsrichtung verlaufenden Kammern 30, 31, 32 ergeben sich folgende Füllungsmöglichkeiten:
- in allen Kammern sind Lotkugeln 14 aus gleichen Metallen oder Metallverbindungen angeordnet, in den einzelnen Kammern sind Flußmittel unterscheidlicher Typen angeordnet,
- in den einzelnen Kammern sind Lotkugeln 14 der verschiedensten Metallverbindungen enthalten. Der Flußmitteltyp ist in allen Kammern gleich,
- in den einzelnen Kammern sind Lotkugeln 14 der verschiedensten Metallverbindungen und Flußmittel vom gleichen Typ untergebracht.

Durch diese Variationen von Metallverbindungen und Flußmitteltypen sind den Erfordernissen jeweils angepaßte Lote herstellbar.

Des weiteren sich die Erfindung die Verwendung eines flußmittelarmen Lots (100) zum lötenden Verbinden von zwei Werkstücken mit einem Raumkörper mit mindestens einen Hohlraum (10) mit einer Füllung aus einer lotspezifischen, von einem lotspezifischen Flußmittel (16) umgebenen Metallegierung (14) mit gleichen oder ungleichen Eigenschaften zum Lot für Lötvorgänge an temperaturempfindlichen Leiterbahnen und Schaltungen unter Vermeidung von Korrosionen.

## Patentansprüche

1. Flußmittelarmes Lot (100) zum lötenden Verbinden von zwei Werkstücken, insbesondere für die Durchführung von Lötvorgängen an temperaturempfindlichen Leiterbahnen und Schaltungen bei gleichzeitiger Vermeidung von Korrosionen,
**dadurch gekennzeichnet,**
**daß** das Lot als Lötdraht (100) gebildet ist, mit einem Raumkörper mit mindestens einem Hohlraum (10), welcher mit wenigstens einer ersten lotspezifischen, von einem lotspezifischen Flussmittel (16) umgebenen Metallegierung (14) gefüllt ist, wobei das Lot (100) und die Metallegierung (14) gleich oder ungleich sind.

2. Lot (100) nach Anspruch 1,
**dadurch gekennzeichnet,**
**daß** die erste lotspezifische Metallegierung in Form von ersten partikelartigen Volumeneinheiten (14), insbesondere Kugeln, in dem Hohlraum (10)angeordnet ist.

3. Lot (100) nach Anspruch 2,
**dadurch gekennzeichnet,**
**daß** die ersten partikelartigen Volumeneinheiten (14) von wenigstens einem lotspezifischen Flußmittel (16) umgeben und zu bezüglich der ersten partikelartigen Volumeneinheiten (14) größeren zweiten partikelartigen Volumeneinheiten (12), insbesondere Kugeln, zusammengefaßt sind.

4. Lot (100) nach Anspruch 1 oder 2,
**dadurch gekennzeichnet,**
**daß** die erste lotspezifische Metallegierung pastenförmig mit wenigstens einem Flußmittel (16) gemischt und in dem Hohlraum (10) angeordnet ist.

5. Lot (100) nach einem der Ansprüche 1 bis 4,
**dadurch gekennzeichnet,**
**daß** der Raumkörper aus wenigstens einer zweiten lotspezifischen Metallegierung gefertigt ist, wobei das Lot (100) und die Matallegierung (14) gleich oder ungleich sind.

6. Lot (100) nach einem der Ansprüche 1 bis 5,
**dadurch gekennzeichnet,**
**daß** der Raumkörper röhrenförmig, als Draht, als Kugel oder als Blech ausgebildet ist.

7. Lot (100) nach einem der Ansprüche 1 bis 6,
**dadurch gekennzeichnet,**
**daß** in dem Hohlraum (10) zusätzlich und voneinander getrennt chemische Verbindungen angeordnet sind, welche bei Erwärmung des Raumkörpers miteinander in Verbindung treten und in einer exothermen Reaktion das Lot über seinen Schmelzpunkt hinaus erwärmen.

8. Lot (100) nach einem der Ansprüche 1 bis 7,
**dadurch gekennzeichnet,**
**daß** der Innenraum (10) des Lotes vermittels Trennwänden in mehrere, in Lotlängsrichtung verlaufende Kammern unterteilt sind, in denen Lotkugeln (14) und Flußmittel (16) angeordnet sind.

9. Lot (100) nach Anspruch 8,
**dadurch gekennzeichnet,**
**daß** der Innenraum (10) des Lotes vermittels drei Trennwänden (40, 41, 42) in drei Längskammem (30, 31, 32) unterteilt sind.

10. Lot (100) nach einem der Ansprüche 8 und 9,
**dadurch gekennzeichnet,**
**daß** in allen Kammern (30, 31, 32) des Lotes Lotkugeln (14) aus gleichen Metallen oder Metallverbindungen angeordnet sind, wobei in den einzelnen Kammern (30; 31; 32) Flußmittel (F1, F2, F3) unterschiedlicher Typen eingebracht sind.

11. Lot (100) nach einem der Ansprüche 8 und 9,
**dadurch gekennzeichnet,**
**daß** in den einzelnen Kammern (30; 31; 32) Lotkugeln (14) der verschiedensten Metallen oder Metallverbindungen angeordnet sind, wobei in allen Kammern (30, 31, 32) der gleiche Flußmitteltyp (F1, F2, F3) untergebracht ist.

12. Lot (100) nach einem der Ansprüche 8 und 9,
**dadurch gekennzeichnet,**
**daß** in den einzelnen Kammern (30, 31, 32) Lotkugeln (14) der verschiedensten Metalle oder Metallverbindungen und Flußmittel der verschiedensten Typen angeordnet sind.

13. Verwendung eines flußmittelarmen Lots (100) gemäß einem der Ansprüche 1 bis 12 für Lötvorgänge an temperaturempflindlichen Leiterbahnen und Schaltungen unter Vermeidung von Korrosionen.

## Claims

1. Flux poor soft solder (100) for the brazing joining of two work pieces, in particular for carrying out brazing processes on temperature sensitive strip conductors and circuits by simultaneously avoiding corrosions,
**characterized in**
**that** the soft solder is formed as filler wire (100) with a space body with at least one hollow space (10) which is filled with at least a first braze specific metal alloy (14) surrounded by a braze specific flux (16), whereby the soft solder (100) and the metal alloy (14) are alike or different.

2. Soft solder (100) according to claim 1,
**characterized in**
**that** the first braze specific metal alloy is arranged in the hollow space (10) in form of first particle-type volume units (14), in particular of globules.

3. Soft solder (100) according to claim 2,
**characterized in**
**that** the first particle-type volume units (14) are surrounded by at least one braze specific flow (16) and are combined to second particle-type volume units (12), in particular to globules, which are bigger with respect to the first particle-type volume units (14).

4. Soft solder (100) according to claim 1 or 2,
**characterized in**
**that** the first braze specific metal alloy is mixed paste-like with at least one flux (16) and is arranged in the hollow space (10).

5. Soft solder (100) according to any of the claims 1 to 4,
**characterized in**
**that** the space body is made of at least one second braze specific metal alloy, whereby the soft solder (100) and the metal alloy (14) are alike or different.

6. Soft solder (100) according to any of the claims 1 to 5,
**characterized in**
**that** the space body is configured tubular, as a wire, as a globule or as a sheet.

7. Soft solder (100) according to any of the claims 1 to 6,
**characterized in**
**that** chemical compounds are arranged additionally and separated the one from the other in the hollow space (10), whereby these compounds communicate with each other when heating the space body and heat the braze in an exothermic reaction beyond its melting point.

8. Soft solder (100) according to any of the claims 1 to 7,
**characterized in**
**that** the inner space (10) of the braze is divided by means of dividing walls into several chambers running in braze longitudinal direction in which braze globules (14) and flux (16) are arranged.

9. Soft solder (100) according to claim 8,
**characterized in**
**that** the inner space (10) of the braze is divided into three longitudinal chambers (30, 31, 32) by means of three dividing walls (40, 41, 42).

10. Soft solder (100) according to any of the claims 8 and 9,
**characterized in**
**that** braze globules (14) made of similar metals or metal alloys are arranged in all chambers (30, 31, 32) of the braze, whereby flux means (F1, F2, F3) of different types are placed in the different chambers (30; 31; 32).

11. Soft solder (100) according to any of the claims 8 and 9,
**characterized in**
**that** braze globules (14) of the most different metals or metal compounds are arranged in the different chambers (30; 31; 32), whereby the same flux type (F1, F2, F3) is placed in all chambers (31, 31, 32).

12. Soft solder (100) according to any of the claims 8 and 9,
**characterized in**
**that** braze globules (14) of the most different metals or metal compounds and flux means of the most different types are arranged in the the different chambers (30, 31, 32).

13. Use of flux poor soft solder (100) according to any of the claims 1 to 12 for brazing processes on temperature sensitive strip conductors and circuits by avoiding corrosions.

## Revendications

1. Brasage tendre pauvre en fondant (100) pour la jonction par brasage de deux pièces d'oeuvre, en particulier pour exécuter des opérations de brasage sur des pistes conductives et des circuits sensibles à la température tout en évitant simultanément des corrosions,
**caractérisé en ce**
**que** le brasage tendre est formé comme fil d'apport (100) avec un corps à compartiment avec au moins un espace creux (10) qui est rempli avec au moins un premier alliage de métal (14) spécifique au brasage, entouré d'un fondant (16) spécifique au brasage, le brasage tendre (100) et l'alliage de métal (14) étant pareils ou différents.

2. Brasage tendre (100) selon la revendication 1,
**caractérisé en ce**
**que** le premier alliage de métal spécifique au brasage est placé dans l'espace creux (10) sous forme de premières unités de volume de type particules (14), en particulier de globules.

3. Brasage tendre (100) selon la revendication 2,
**caractérisé en ce**
**que** les premières unités de volume de type particules (14) sont entourées par au moins un fondant spécifique au brasage (16) et sont réunies en secondes unités de volume de type particules (12), en particulier en globules, plus grandes que les premières unités de volume de type particules (14).

4. Brasage tendre (100) selon la revendication 1 ou 2,
**caractérisé en ce**
**que** le premier alliage de métal spécifique au brasage est mélangé en forme de pâte avec au moins un fondant (16) et est placé dans l'espace creux (10).

5. Brasage tendre (100) selon l'une des revendications 1 à 4,
**caractérisé en ce**
**que** le corps à compartiment est fabriqué en au moins un second alliage de métal spécifique au brasage, le brasage tendre (100) et l'alliage de métal (14) étant pareils ou différents.

6. Brasage tendre (100) selon l'une des revendications 1 à 5,
**caractérisé en ce**
**que** le corps à compartiment est configuré en forme de tube, comme fil, globule ou tôle.

7. Brasage tendre (100) selon l'une des revendications 1 à 6,
**caractérisé en ce**
**que** des combinaisons chimiques sont placées en plus dans l'espace creux (10) et en étant séparées les unes des autres, ces combinaisons chimiques entrant en contact les unes avec les autres lors du réchauffement du corps à compartiment et échauffant le brasage dans une réaction exothermique au-delà de son point de fusion.

8. Brasage tendre (100) selon l'une des revendications 1 à 7,
**caractérisé en ce**
**que** l'espace intérieur (10) du brasage est divisé par des cloisons en plusieurs compartiments dans le sens longitudinal du brasage dans lesquels sont placés des globules de brasage (14) et du fondant (16).

9. Brasage tendre (100) selon la revendication 8,
**caractérisé en ce**
**que** l'espace intérieur (10) du brasage est divisé par trois cloisons (40, 41, 42) en trois compartiments longitudinaux (30, 31, 32).

10. Brasage tendre (100) selon l'une des revendications 8 et 9,
**caractérisé en ce**
**que** des globules de brasage (14) en métaux ou combinaisons métalliques pareilles sont placés dans tous les compartiments (30, 31, 32) du brasage, des fondants (F1, F2, F3) de types différents étant mis en place dans les différents compartiments (30; 31; 32).

11. Brasage tendre (100) selon l'une des revendications 8 et 9,
**caractérisé en ce**
**que** des globules de brasage (14) des métaux ou combinaisons métalliques les plus différents sont placés dans les différents compartiments (30; 31; 32), le même type de fondant (F1, F2, F3) étant mis en place dans tous les compartiments (30, 31, 32).

12. Brasage tendre (100) selon l'une des revendications 8 et 9,
**caractérisé en ce**
**que** des globules de brasage (14) des métaux ou combinaisons métalliques les plus différents et des fondants des types les plus différents sont placés dans les différents compartiments (30, 31, 32).

13. Utilisation d'un brasage tendre pauvre en fondant (100) selon l'une des revendications 1 à 12 pour des opérations de brasage sur des pistes conductives et des circuits sensibles à la température en évitant des corrosions.
